(19) **Europäisches Patentamt / European Patent Office / Office européen des brevets**

(11) **EP 2 110 427 A1**

(12) **EUROPEAN PATENT APPLICATION**
published in accordance with Art. 153(4) EPC

(43) Date of publication:
**21.10.2009 Bulletin 2009/43**

(51) Int Cl.:
**C10M 169/04** (2006.01) **C10M 125/26** (2006.01)
**F16C 33/20** (2006.01)

(21) Application number: **08703175.3**

(22) Date of filing: **15.01.2008**

(86) International application number:
**PCT/JP2008/050311**

(87) International publication number:
**WO 2008/087920 (24.07.2008 Gazette 2008/30)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.01.2007 JP 2007007434**
**16.01.2007 JP 2007007438**

(71) Applicant: **NTN Corporation**
**Osaka-shi, Osaka 550-0003 (JP)**

(72) Inventor: **The designation of the inventor has not yet been filed**

(74) Representative: **White, Duncan Rohan**
**Marks & Clerk LLP**
**90 Long Acre**
**London**
**WC2E 9RA (GB)**

(54) **SLIDING MATERIAL COMPOSITION**

(57) The present invention provides a sliding material composition that is capable of continuously supplying a lubricant to the surface of a sliding portion and has a low frictionality and a low wearbility A sliding material composition of the present invention includes a resin material with which at least porous silica and a lubricant are mixed. The ratio of the sum of the mixing amount of the porous silica and that of the lubricant to the whole amount of the sliding material composition is 30 to 60 vol %. The interconnected cell ratio of the oil-containing porous silica in which the lubricant is held by the porous silica is not less than 20% when the interconnected cell ratio is found by a predetermined computing method to be carried out by utilizing the principle of a Monte Carlo method.

Fig.1

**Description**

TECHNICAL FIELD

The present invention relates to a sliding material composition capable of continuously oozing out a slight amount of a lubricant to a sliding interface.

BACKGROUND ART

A sliding material composition such as a resin sliding material obtained by molding a lubricous resin composition is strongly demanded to have a higher function year by year and have a low friction and a low wear in an initial state and maintain an initial sliding property thereof for a long time. Heretofore to achieve the low friction and the low wear, a resin material and other components are mixed with a solid lubricant such as graphite, polytetrafluoroethylene, molybdenum disulfide, boron nitride or the like or with a reinforcing material such as glass fiber, carbon fiber or the like to impart a sliding property to the sliding material composition. But when the solid lubricant is mixed with the resin material, there is a limitation in the decrease of the friction coefficient. To allow the resin material to have a lower friction, a method of mixing a lubricant such as lubricating oil with the resin material is carried out.

But when only the lubricant is mixed with the resin material and the like, there occur problems described below.

For example, when only the lubricating oil is dispersed in the resin material as the lubricant, the dispersion unit of the oil is changed by kneading. Thus it is difficult to stably produce the resin material having a constant sliding property. To improve the sliding property (friction property), it is preferable that the mixing amount of the lubricating oil is large. But when the mixing amount of the lubricating oil is large, the sliding of a screw and a metering period of time become unstable and thus a cycle time becomes long. Thus it is difficult to stablyproduce the sliding material composition. There also occur problems that the oil sticks to a die and that it is difficult to obtain a high dimensional accuracy. Another problem is that the lubricating oil cannot be uniformly dispersed in the resin material in dependence on the combination of the lubricating oil and the resin material, for example, a case when the compatibility between the lubricating oil and the resin material is unfavorable.

The resin material mixed with the lubricating oil oozes the lubricating oil to the surface of a sliding portion when the layer of the lubricating oil appears on the sliding portion as a result of gradual wear of the layer of the base resin at a sliding time. It is difficult to control the state of the oozing of the lubricating oil. Thus there occurs a problem that pores formed owing to the oozing of the lubricating oil causes a decrease in the strength of the resin layer. In improving the mechanical strength and the resistance to wear by mixing a filler with the resin material, oil is locally present on the interface of the filler. Thus there is a possibility that a sufficient reinforcing effect cannot be obtained.

To solve these problems, there is proposed the resin composition, to be injection-molded, which contains 0.01 to 80 wt% of the spherical silica gel composed of the thermoplastic resin impregnated with the lubricating oil (see patent document 1). There is also proposed the composition containing the lubricity-imparting agent composed of the specific porous silica impregnated with the silicone oil (see patent document 2).

But even though the compositions of these proposals are used, there is a problem that in the recent strict friction condition (for example, high pressure), a preferable friction and wear property cannot be obtained. This problem results from the fact that according to a mixing ratio of the porous silica and the like, a lot of porous silica not interconnected with the surface of the sliding material composition is present inside a molding and that because the lubricant held by the porous silica is not effectively utilized, the amount of the lubricant is insufficient on the surface of the sliding portion. In conventional sliding material compositions, the interconnectedness of such porous silica and the like is not considered, but the mixing ratio of such porous silica and the like is determined experientially and experimentally.

In the method of producing a porous material made of resin by extracting a pore-forming material with a solvent after the pore-forming material is mixed with the resin, the method of finding the interconnectedness by computation based on the mixing amount of the pore-forming material is disclosed (see patent document 3). But this method relates to the method of producing the porous material by the extraction method and no description is made on sliding material compositions.

Patent document 1 : Japanese Patent Application Laid-Open No. 7-3074 Patent document 2: Japanese Patent Application Laid-Open No. 2002-129183
Patent document 3: Japanese Patent Application Laid-Open No. 2006-282898

DISCLOSURE OF THE INVENTION

PROBLEMS TO BE SOLVED BY THE INVENTION

The present invention has been made to cope with the abave-describedproblems. Therefore it is an object of the present invention to provide a sliding material composition in which an interconnected cell ratio of oil-containing porous silica in which a lubricant is held by porous silica is made high to continuously supply the lubricant to the surface of a sliding portion and which has a low friction and wear.

MEANS FOR SOLVING THE PROBLEMS

A sliding material composition of the present invention comprises a resin material with which at least porous silica and a lubricant are mixed; and the ratio of the sum of the mixing amount of the porous silica and that of the lubricant to the whole amount of the sliding material composition is 30 to 60 vol %.

The porous silica is spherical porous silica, having continuous pores, which consists of an aggregate of primary fine particles; and the average particle diameter of the spherical porous silica is 0.5 to 100$\mu$m.

The inside of the porous silica and the outer surface thereof are covered with a silanol group.

The porous silica has an oil absorption amount at 300 to 400 ml/100g; and the porous silica is impregnated with the lubricant in advance.

The resin material is polyethylene resin. The lubricant is silicone oil.

Of 30 to 60 vol % which is the ratio of the sum of the mixing amount of the porous silica and that of the lubricant, the ratio of the mixing amount of the porous silica is 5 to 10 vol %, and the ratio of the mixing amount of the lubricant is 25 to 50 vol %.

The interconnected cell ratio of the oil-containing porous silica in which the lubricant is held by the porous silica is not less than 20% when the interconnected cell ratio is found by a predetermined computing method;

The predetermined computing method comprises a modeling step of expressing a bulkbody supposed to be composed of the oil-containing porous silica and the resin material as a model formed by layering an arbitrary number of cells one upon another in an X-axis direction and a Y-axis direction both of which are face directions and at least 25 cells one upon another in a Z-axis direction which is a depth direction, where the cells are cubic cells with the length of one edge thereof equal to the average particle diameter of the oil-containing porous silica; a random disposing step of disposing cells corresponding to a mixing ratio of the oil-containing porous silica in the bulk body at random positions as oil-containing porous silica cells inside the model; and a step of counting the number of interconnected cells of setting cells which contact each other in the model in a vertical direction, a left-to-right direction, or a longitudinal direction as continuous cells and setting an XY face composed of cells of an uppermost surface as a surface layer of the bulk body, and counting oil-containing porous silica cells of the surface layer and oil-containing porous silica cells, disposed inside the model, which are continuous from the oil-containing porous silica cells of the surface layer to oil-containing porous silica cells disposed at a depth of 25 cells as interconnected cells. The ratio of the number of interconnected cells obtained at the step of counting the number of the interconnected cells to the number of oil-containing porous silica cells present from the surface layer of the bulk body to a depth of 25 cells composing the model is computed as an interconnected cell ratio.

The number of cells used in the modeling step is not less than 30 cells in the X-axis direction, not less than 30 cells in the Y-axis direction, and the number of cells of one horizontal layer is set to not less than 1000.

In mixing the lubricant with the resin material to obtain a sliding material having continuous sliding property, it has been found that by utilizing a porous silica, especially a porous silica having continuous pores, and mixing them at a certain amount in a specific range, the friction and wear properties can be improved and maintained for a long term. As the specific range, the ratio of the sum of the mixing amount of the porous silica and that of the lubricant to the whole amount of the slidingmaterial composition is 30 to 60 vol %. In this range, the interconnected cell ratio of the porous silica can be set to not less than 20%.

The present invention is based on the above-described knowledge.

By mixing the above-described specific amount of the porous silica impregnated with the lubricant with the resin material, the following effects are recognized.

(1) The porous silica is connected with each other inside the resin, and the lubricant can be continuously supplied to the sliding interface even in a strict lubricating condition. Therefore excellent friction and wear properties can be maintained.

(2) By mixing the lubricant with the resin material in a moldability-securing range and mixing the porous silica impregnated with the lubricant with the resin material, it is possible to make the amount of the oil contained in the composition large. Therefore it is possible to make the mixing amount of the lubricant larger than the mixing amount thereof in the conventional art.

(3) By mixing the porous silica impregnated with the lubricant with the resin material, the lubricating component is retained by the porous silica. Therefore compared with the case in which merely a large amount of the lubricant is mixed with the resin material, the sliding material composition of the present invention does not have disadvantages that a screw slides at the time of injection molding, that a cycle time is long because metering is unstable, that it is difficult to obtain high dimensional accuracy, and that the lubricant adheres to the surface of a die and the finish of a surface of the sliding material composition to be molded is unfavorable.

(4) It is possible without a trouble to knead combinations of components that cannot be kneaded in the conventional art, owing to the compatibility between the resin material and the lubricating oil,

(5) Of the porous silica, the spherical porous silica is destroyed by a shear force of the sliding interface. Therefore even though a mating sliding material is made of a soft material, a molding of the sliding material composition does not damage the mating sliding material.

(6) When oil-containing resin and a reinforcing material are used in combination, the lubricant is locally present on the interface between the reinforcing material and the resin by independently mixing the lubricant and the reinforcing material with the resin and kneading them. Thus there occurs a case in which a reinforcing effect cannot be displayed sufficiently. But by kneading the lubricant that is impregnated into the porous silica, especially the spherical porous silica, and the reinforcing material with the resin, the lubricant is not present on the interface between the reinforcing material and the resin. Thus a desired reinforcing effect is obtained.

EFFECT OF THE INVENTION

The sliding material composition comprises the resin material with which at least the porous silica and the lubricant are mixed; and the ratio of the sum of the mixing amount of the porous silica and that of the lubricant to the whole amount of the sliding material composition is 30 to 60 vol %. Therefore the lubricant is held inside the porous silica, and the lubricant can be supplied little by little to the sliding interface. Further the oil-containing porous silica in which the lubricant is held by the porous silica is connected to each other inside the composition, and the interconnected cell ratio of the oil-containing porous silica found by the predetermined computing method is not less than 20%. Therefore it is possible to continuously supply the lubricant to the sliding interface and maintain excellent friction and wear properties.

Further because the porous silica is impregnated with the lubricant, it is possible to maintain the mechanical property of the sliding material composition and increase the amount of the oil to be contained therein.

The porous silica impregnated with the lubricant (oil absorption amount: 300 to 400 ml/100g) is mixed with the resin material. Owing to the compatibility between the resin material and the lubricating oil, it is possible without a trouble to mix and knead combinations of components that cannot be kneaded in the conventional art. In addition, because it is also possible to add the lubricant to the resin material, it is possible to mix a large amount of the lubricant thereinto. In addition the sliding material composition of the present invention does not have disadvantages that a screw slides at the time of injection molding, that a cycle time is long because metering is unstable, that it is difficult to obtain high dimensional accuracy, and that the lubricant adheres to the surface of a die and the finish of a molded surface is unfavorable.

The porous silica to be used for the sliding material composition is spherical porous silica, having continuous pores, which is an aggregate of primary fine particles, the porous silica is destroyed by the shear force of the sliding interface. Therefore even though a mating sliding material is made of a soft material, a molding of the sliding material composition does not damage the mating sliding material.

Because the average particle diameter of the spherical porous silica is 0.5 to 100$\mu$m, the spherical porous silica has an excellent dispersibility. Therefore when the spherical porous silica is used in combination with other reinforcing materials, it is possible to prevent the lubricant from being present at the interface between the reinforcing material and the resin and obtain a desired reinforcing effect.

The number of cells used in the modeling step of the above-described computing method is not less than 30 cells in the X-axis direction, not less than 30 cells in the Y-axis direction, and the number of cells of one horizontal layer is set to not less than 1000. Therefore it is possible to evaluate the interconnected cell ratio of the oil-containing porous silica at a high accuracy. Consequently in the obtained sliding material composition, it is possible to accurately set the interconnected cell ratio of the oil-containing porous silica to not less than 20% and thus keep the above-described friction and wear properties.

BRIEF DESCRIPTION OF THE DRAWINGS

Fig. 1 shows the result of a friction and wear test.

Fig. 2 is a reference view of the model of the sliding material composition of the present invention.

Fig. 3 shows a position relationship defining continuous cells.

Fig. 4 shows the relationship between a mixing amount of oil-containing porous silica and an interconnected cell ratio.

BEST MODE FOR CARRYING OUT THE INVENTION

The sliding material composition of the present invention contains a resin material with which at least porous silica and a lubricant are mixed; and the ratio of the sum of the mixing amount of the porous silica and that of the lubricant to a whole amount of the sliding material composition is 30 to 60 vol %. It is especially preferable to determine the above-described mixing ratio so that the interconnected cell ratio of the oil-containing porous silica found by a predetermined computing method is not less than 20%.

The computing method of the present invention is carried out by utilizing the principle of a Monte Carlo method to compute the ratio of the total volume of oil-containing porous silica continuous from the surface of the sliding material composition to the total volume of the oil-containing porous silica contained in the sliding material composition. That is, the computing method is carried out to compute the interconnected cell ratio. The Monte Carlo method is to form a large number of data by using a random numbers and approximately find a solution or a law based on the data.

The method of the present invention of computing the interconnected cell ratio is composed of the following steps.

(1) Modeling Step

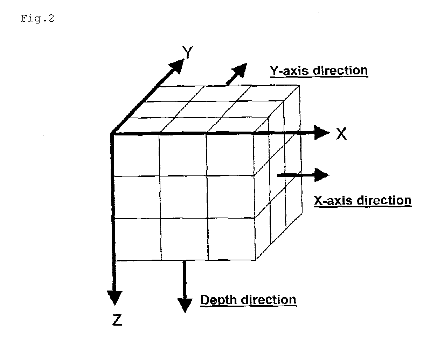

Let it be supposed that a bulk body is composed of the oil-containing porous silica and the resin material that is the matrix. As shown in Fig. 2, the bulk body is expressed as a model formed by layering an arbitrary number of cubic cells one upon another in an X-axis direction and a Y-axis direction both of which are face directions and a Z-axis direction that is a depth direction. Fig. 2 is a reference diagram in which three cells are layered one upon another in the Z-axis direction. But in an actual modeling time, at least 25 cells are layered one upon another. The length of one edge of each cubic cell is set equally to the average particle diameter of the oil-containing porous silica.

(2) Random Disposing Step

Cells corresponding to the mixing ratio of the oil-containing porous silica of the bulk body are disposed at random positions inside the model as the oil-containing porous silica cells. "Disposed" herein means an operation of defining randomly selected cells as the oil-containing porous silica cells in the model.

(3) Step of Counting the Number of Interconnected cells

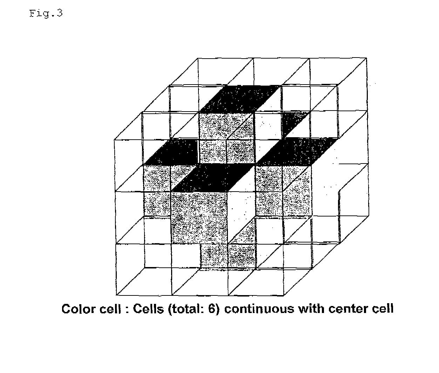

The cubic cells are disposed in the model as shown in Fig. 2. In the present invention, the cells are supposed to be continuous with one another only when the cells make face contacts. Except cells composing a surface-layer face and a lowermost-layer face, as shown in Fig. 3, cells continuous with one arbitrary cell (center cell) are upper and lower cells, left and right cells, and front and rear cells. Thus the number of cells continuous with one arbitrary cell is six. A periodic boundary condition is set in the X-axis direction and the Y-axis direction.

A portion of the oil-containing porous silica cell interconnected up to the surface of thebulkbody is an interconnected path where the lubricant is movable. Therefore in the model shown in Fig. 2, an XY face composed of the uppermost-surface layer cells is set as the surface layer of the bulk body (molding). Oil-containing porous silica cells that are continuous from the oil-containing porous silica cells of the surface layer and disposed from the surface layer of the bulk body to the depth of 25 cells are counted as interconnected cells.

The number of the interconnected cells is the sum of the number of the oil-containing porous silica cells of the surface layer and the number of the oil-containing porous silica cells which are disposed under the surface layer and continuous from the oil-containing porous silica cells of the surface layer.

(4) Computation of interconnected cell ratio

The interconnected cell ratio (%) is computed by using an equation (1) shown below from the number of the interconnected cells and the number of the oil-containing porous silica cells (non-interconnected cells are included) present to the depth of the 25 cells composing the model:

[Formula 1]

Interconnected cell ratio (%) = (Number of interconnected cells)

× 100 /(Number of oil-containing porous silica cells present from surface layer to depth of 25 cells) --- (1)

In the modeling step, by setting the average particle diameter of the oil-containing porous silica and the thickness of the molding as parameters, the number of cells to be disposed in the Z-axis direction is determined. For example, when the thickness of the molding is 3mm and the average particle diameter of the oil-containing porous silica is 100μm, the number of cells in the Z-axis direction is 30.

The number of cells in the X-axis direction and the Y-taxis direction is arbitrarily determined. When the number of disposed cells is too small, accurate approximation cannot be made. Thus it is preferable to dispose not less than 30 cells in the X-axis direction, not less than 30 cells in the Y-axis direction, and not less than 1000 per horizontal layer. By setting the number of the cells of one horizontal layer to not less than 1000, it is possible to evaluate the interconnected cell ratio of the oil-containing porous silica at an accuracy of not less than 0.1%.

In the random disposing step, let it be supposed that a desired amount of oil-containing porous silica particles are mixed in the bulk body. Cells whose number corresponds to the mixing ratio of the oil-containing porous silica are disposed inside the model at random positions as the oil-containing porous silica cells.

For example, when the ratio of the mixing ratio of the oil-containing porous silica to the total of the amount of the resin material, that of the oil-containing porous silica, and that of other components is 40 vol %, and when the number of all the cells composing the model is 1000, 400 cells of 1000 cells are selected at random to set 400 cells as the oil-containing porous silica cells. 600 cells of 1000 cells indicate the resin and the like. The oil-containing porous silica cells are selected at random in all of the X-axis direction, the Y-axis direction, and the Z-taxis direction.

At the step of counting the number of interconnected cells, the number of the oil-containing porous silica cells continuous from the surface layer (XY face) is counted for each one-cell depth. The total number of the continuous oil-containing porous silica cells present in the range from the surface layer to the depth of 25 cells (number of cells in the Z-axis direction) is set as the number of the interconnected cells. The oil-containing porous silica cell uncontinuous from the surface layer to the depth of 25 cells is not counted. Even in the case where cells are disposed beyond the 25 cells in the Z-axis direction, the oil-containing porous silica cells disposed from the surface layer to the depth of 25 cells are considered.

To prevent discontinuity of cells in the X-axis direction in layers disposed at both ends in the X-axis direction, the periodic boundary condition is applied. More specifically, let it be supposed that a layer disposed at one end in the X-axis direction is present outside a layer disposed at the other end in the X-axis direction by one cell and that the layer disposed at the other end in the X-axis direction is present outside the layer disposed at the one end in the X-axis direction by one cell. These cells supposed to be present at the above-described positions are used to judge the continuity of the cell of the layers disposed at the one and other ends in the X-axis direction and are not included as the number of cells. A similar periodic boundary condition also applies in the Y-axis direction.

By applying the periodic boundary condition in the X-axis direction and the Y-axis direction, it is possible to prevent the discontinuity of the cells in the layers at both ends in the X-axis direction and the Y--axis direction and make a simulation similar to the actuality.

From the counted number of the interconnected cells, the interconnected cell ratio (%) is computed based on the equation (1).

The computation of the interconnected cell ratio by a series of the above-described operations after the parameters are set is performed on a computer by a computing program formed by a programming language such as a C++ language or the like.

More specifically, the parameters such as the average particle diameter of the oil-containing porous silica, the thickness of the molding, the mixing ratio of the oil-containing porous silica, the number of cells in X-direction and Y-direction, and the like necessary for computing the interconnected cell ratio are inputted to the computer from an input terminal thereof. Thereby based on the program, the computer executes the modeling step, the random disposing step, and the step of counting the number of the interconnected cells and computes the interconnected cell ratio (%) from the counted number of the interconnected cells.

It is possible to derive the relationship between the mixing ratio of the oil-containing porous silica and the interconnected cell ratio by finding the interconnected cell ratio in different several patterns in the mixing ratio of the oil-containing porous silica. Based on the relationship, it is possible to find the mixing ratio of the oil-containing porous silica necessary for securely obtaining the interconnected cell ratio by an approximate computation.

The computation of the interconnected cell ratio to be performed by utilizing the Monte Carlo method includes the computing step dependent on the random numbers. Therefore even at the same mixing ratio, results of computations are a little different from one another. Therefore to improve the accuracy of the interconnected cell ratio at each mixing ratio, it is preferable to perform computations at hundreds to thousands of times by using the same parameters and find an average value of solutions found by the computations.

The matrix of the sliding material composition of the present invention consists of the resin material that consists of resin or a mixture of the resin and a reinforcing material added thereto. The resinmaterial capable of forming a coating film is also included.

As the resin material, it is possible to use synthetic resin such as thermoplastic resin and thermosetting resin, without limiting the resin material to a specific resin, provided that the synthetic resin is capable of forming a form that can be used as a sliding material. It is possible to exemplify polyethylene resin such as low-density polyethylene, high-density polyethylene, ultra-high-molecular-weight polyethylene, and the like; modified polyethylene resin, water-crosslinked polyolefin resin, polyamide resin, aromatic polyamide resin, polystyrene resin, polypropylene resin, silicone resin, urethane resin, polytetrafluoroethylene resin, chlorotrifluoroethylene resin, tetrafluoroethylene-hexafluoropropylene copolymer resin, tetrafluoroethylene-perfluoroalkyl vinyl ether copolymer resin, vinylidene fluoride resin, ethylene-tetrafluoroethylene copolymer resin, polyacetal resin, polyethylene terephthalate resin, polybutylene terephthalate resin, polyphenylene ether resin, polycarbonate resin, aliphatic polyketone resin, polyvinyl pyrrolidone resin, polyoxazoline resin, polyphenylene sulfide resin, polyether sulfone resin, polyether imide resin, polyamide imide resin, polyether ether ketone resin, thermoplastic polyimide resin, thermosetting polyimide resin, epoxy resin, phenol resin, unsaturated polyester resin, and vinyl ester resin. It is also possible to exemplify mixtures, namely, polymer alloys each consisting of not less than two kinds selected from among the above-described synthetic resins.

Of these resin materials, it is preferable to use the polyethylene resin excellent in a low frictional property.

As a material capable of forming a coating film, it is possible to use the above-described synthetic resin, namely, a resin component dissolvable or dispersible in an organic solvent. It is also possible to use a precondensate that has a high molecular weight in a hardening reaction in forming the coating film.

The porous silica that can be used in the present invention has continuous pores and is capable of being impregnated with a lubricant and holding it. Preferable porous silica consists of powder containing amorphous silicon dioxide as its main component. For example, it is possible to list precipitation silica which is an aggregate of fine particles having a primary particle diameter of not less than 15nm or perfectly spherical porous silica, (see Japanese Patent Application Laid-Open No. 2000-143228) which is an aggregate of primary fine particles, having a particle diameter of 3 to 8nm, which is obtained by emulsifying an aqueous solution of alkali silicate containing an alkali metal salt or an alkali earth metal salt in an organic solvent and gelling the emulsified alkali silicate with carbon dioxide.

In the present invention, the porous silica in which perfectly spherical silica particles are formed by the aggregation of primary fine particles having a particle diameter of 3 to 8nm has continuous pores and has a property of being destroyed by a shear force of a sliding interface. Thus this porous silica is especially preferable. The average particle diameter of the perfectly spherical silica particle is 0.5 to 100$\mu$m. The perfectly spherical silica particle is capable of holding the lubricant therein and capable of supplying the lubricant which has impregnated thereinto to the sliding interface little by little. The perfectly spherical silica particle having the average particle diameter of less than 0.5$\mu$m is handled unfavorably. In addition the impregnation amount of the lubricant is insufficient. The perfectly spherical silica particle having the average particle diameter of more than 100$\mu$m has a low dispersibility in melted resin. In addition there is a possibility that the aggregate is destroyed by a shear force acting when the melted resin is kneaded and that the spherical configuration cannot be held. Considering handleability and the impartation of a sliding property, the average particle diameter is especially preferably 1 to 20$\mu$m. As such perfectly spherical porous silica, it is possible to exemplify Sunsphere produced by Asahi Glass Co., Ltd. and Godball produced by Suzuki Yushi Co., Ltd.

It is preferable that the perfectly spherical silica particle which is the aggregation of the primary fine particles has properties that the specific surface area thereof is 200 to 900$m^2$/g and especially 300 to 800$m^2$/g, that the volume of the pore thereof is 1 to 3.5ml/g, that the diameter of the pore thereof is 5 to 30 nm and especially 20 to 30 nm, and that the oil absorption amount thereof is 150 to 400 ml/100g and especially 300 to 400 ml/100g. It is preferable that when the perfectly spherical silica particle is dried again after it is immersed in water, the perfectly spherical silica particle keeps the pore volume and the oil absorption, amount at not less than 90 vol % of the pore volume and the oil absorption amount which the perfectly spherical silica particle has before it is immersed in water. The specific surface area and the pore volume are measured by a nitrogen adsorption method. The oil absorption amount is measured in accordance with JIS K5101. It is preferable that the inside of the perfectly spherical silica particle and the outer surface thereof are covered with silanol groups (Si-OH) because the lubricant can be easily held inside the perfectly spherical silica particle. The porous silica can be surface-treated with an organic treating agent or an inorganic treating agent suitable for the matrix.

In the present invention, in dependence on the combination of the resin material and the porous silica and an extent of the mixing amount of the porous silica, it is possible to use the porous silica having the average particle diameter up to 1000$\mu$m. The configuration of the particle is not limited to a specific one. For example, when the average particle diameter, the specific surface area, and the oil absorption amount are within the range of those of the perfectly spherical silica particle, even unspherical porous silica can be used. From the standpoint of attackability to a mating sliding material and kneadability, a spherical particle and a perfectly spherical particle are preferable. The "spherical" means a sphere having 0.8 to 1.0 in the ratio of a minor diameter thereof to a major diameter thereof. The "perfectly spherical" means a sphere closer to a perfect sphere than "spherical".

The lubricant that can be used in the present invention is not limited to a specific one, but it is possible to use substances such as lubricating oil liquid at a normal temperature, various chemicals and ionic liquids, wax solid at a normal temperature, greasy substances containing a thickener in the lubricating oil, provided that the substances have a lubricating effect.

As the lubricating oil, it is possible to use lubricating oil, generally used, including mineral oil such as spindle oil, oil for a refrigerator, turbine oil, machine oil, dynamo oil, and the like; hydrocarbon-based synthetic oil such as polybutene, poly-α-olefin, alkylnaphthalene, alicyclic compounds; non-hydrocarbon-based synthetic oil such as ester oil of natural fats and oils and polyol, phosphate ester, diester oil, polyglycol oil, silicone oil, polyphenyl ether oil, alkyldiphenyl ether oil, alkylbenzene, fluorinated oil, and the like. The lubricating oil can be selected in conformity to the condition in which the sliding material composition of the present invention is used and the target performance. It is also possible to select lubricating oil having a resistance to heat in conformity to a temperature for kneading of resin and a molding temperature. In a case where a low friction is demanded, a preferable result is obtained by using the silicone oil and the like. The silicone oil is especially preferable because the silicone oil has affinity for silanol groups remaining on the surface of the perfectly spherical porous silica. As the silicone oil, it is possible to use both the silicone oil not having a functional group and having the functional group.

As the wax, it is possible to list wax of paraffin wax having not less than 24 carbon atoms, olefin wax having not less than 26 carbon atoms, alkylbenzene having not less than 28 carbon atoms, crystalline hydrocarbon wax such as micro-crystalline wax and wax consisting of derivatives of higher fatty acid such as myristic acid, palmitic acid, stearic acid, arachic acid, montanic acid, unsaturated fatty acid (for example, octadecenoic acid, parinaric acid, and the like) having not less than 18 carbon atoms. As the wax consisting of the derivatives of higher fatty acid, it is possible to list 1) methyl and ethyl esters of higher fatty acid having not less than 22 carbon atoms such as ethyl behenate, ethyl tricosanoate, and the like, ester of higher fatty acid having not less than about 16 carbon atoms and higher monohydroxy alcohol having not less than 15 carbon atoms, higher fatty acid esters such as octadecyl stearate, higher fatty acid triglyceride having not less than 14 carbon atoms, and the like; 2) higher fatty acid amides such as palmitamide, stearamide, oleamide, and the like; and 3) salts of higher fatty acid and alkalimetal or alkaline earthmetal such as lithium stearate, calcium stearate, and the like.

A greasy substance is formed by adding a thickener to the above-described lubricating oil serving as the base oil. As the thickener, it is possible to exemplify 1) soaps such as calcium-based soap, sodium-based soap, lithium-based soap, barium-based soap, aluminum-based soap, zinc-based soap, and the like; 2) complex soaps such as calcium-based complex soap, sodium-based complex soap, lithium-based complex soap, barium-based complex soap, aluminum-based complex soap, zinc-based complex soap, and the like; and 3) non-soaps such as sodium terephthalate, a diurea compound, a triurea compound, a tetraurea compound, a polyurea compound, a urea urethane compound, diurethane compound, silica aerogel, montxnorillonite, Benton, polytetrafluoroethylene, a fluorinate ethylene-propylene copolymer, boron nitride, and the like.

Regarding the mixing ratio of each component of the sliding material composition, the ratio of the sum of the mixing amount of the porous silica and that of the lubricant to the whole amount of the sliding material composition is 30 to 60 vol %. The remainder is the resin material and others. It is more favorable that the ratio of the sum of the mixing amount of the porous silica and that of the lubricant to the whole amount of the sliding material composition is 30 to 50 vol%.

When the ratio of the sum of the mixing amount of the porous silica and that of the lubricant to the whole amount of the sliding material composition is less than 30 vol %, the sliding material composition is incapable of maintaining an excellent characteristic in a strict frictional condition. When the ratio of the sum of the mixing amount of the porous silica and that of the lubricant to the whole amount of the sliding material composition is more than 60 vol %, the amount of the base resin is small and thus there is a fear that the strength of the slidingmaterial composition decreases greatly, which is unpreferable.

By setting the ratio of the sum of the mixing amount of the porous silica and that of the lubricant to the whole amount of the sliding material composition to 30 to 60 vol %, the oil-containing porous silica in which the lubricant is held by the porous silica is connected to each other inside the resin and capable of continuously supplying the lubricant to the sliding interface. Thereby the sliding material composition is capable of maintaining an excellent friction and wear properties.

It is preferable that in the sliding material composition, the interconnected cell ratio of the oil-containing porous silica in which the lubricant is held by the porous silica is not less than 20%. When the interconnected cell ratio is less than 20%, the movement amount of the lubricant from the inside of a molding in which the oil-containing porous silica serves as the interconnected path is insufficient. Thus the sliding material composition is incapable of maintaining an excellent characteristic in a strict frictional condition. The interconnected cell ratio is found by the above-described computing method.

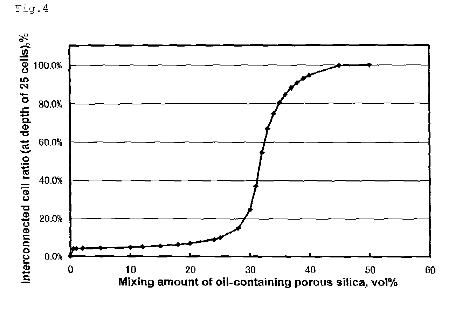

In the sliding material composition, by setting the ratio of the sum of the mixing amount of the porous silica and that of the lubricant to the whole amount of the slidingmaterial composition to 30 to 60 vol %, it is possible to realize the interconnected cell ratio of the oil-containing porous silica in which the lubricant is held by the porous silica to be not less than 20% (see Fig. 4).

As the details of 30 to 60 vol % which is the sum of the mixing amount of the porous silica and that of the lubricant, the vol % of the porous silica is 5 to 10, and that of the lubricant is 25 to 50. The ratio between the porous silica and the lubricant is 1:4 to 1:6. By determining the ratio therebetween such that the internal pores of the porous silica are filled with the lubricant, it is possible to obtain preferable friction and wear properties. The mixing weight can be computed by multiplying vol % of each component by the density thereof. Herein vol % of the porous silica is a ratio, supposing that unporous solid silica is used instead. That is, vol % of the porous silica is computed by using not the bulk specific gravity of the porous silica but the true specific gravity thereof. Therefore the actual volume ratio in the state in which the porous silica has interconnected pores inside is large.

To improve various mechanical properties with improving the frictional and wear properties, appropriate fillers can be added to the resin material of the sliding material composition. For example, fibers such as glass fiber, pitch-based carbon fiber, polyacrylonitrile-based carbon fiber, aramid fiber, alumina fiber, boron fiber, silicon carbide fiber, silicon nitride fiber, boron nitride fiber, asbestos, quartz wool, and metal fiber; cloth formed by knitting these fibers; minerals such as calcium carbonate, lithium phosphate, lithium carbonate, calcium sulfate, lithium sulfate, talc, silica, clay, mica, and the like; inorganic whiskers such as titanium oxide whisker, potassium titanate whisker, aluminum borate whisker, calcium sulfate whisker, and the like; carbon black; graphite; polyester fiber; and thermosetting resin such as polyimide resin, polybenzimidazole resin, and the like.

To improve the sliding performance, the sliding material composition is capable of containing an amino acid compound, polyoxybenzoylpolyester resin, polybenzimidazole resin, liquid crystal resin, pulp of aramid resin, polytetrafluoroethylene, boron nitride, molybdenum disulfide, and tungsten disulfide.

Further, to improve the thermal conductivity of the sliding material composition, it may contain carbon fiber, metal fiber, graphite powder, zinc oxide, and the like. Furthermore it is possible to use the above-described fillers in combination. Additives widely applicable to synthetic resins generally used may be used in combination with the above-described fillers, provided that the addition amount thereof does not inhibit the effect of the present invention. For example, additives for industrial use such as a mold release agent, a fire-retardant agent, an antistatic agent, a weather resistance improving agent, an antioxidant, a coloring agent, and a conductivity-imparting agent may be appropriately added to the resin material. The method of adding these additives thereto is not limited to a specific method.

The method for producing the sliding material composition of the present invention has a mixing ratio computing step of finding the mixing ratio of the oil-containing porous silica necessary for securely obtaining the interconnected cell ratio, a step of mixing the oil-containing porous silica with the resin at a ratio obtained at the mixing ratio computing step and kneading the mixture, and a step of molding the resin material containing the oil-containing porous silica to form a molding or a coating film.

In the above-described producing method, the above-described method of computing the interconnected cell ratio is utilized. Thus it is possible to produce the sliding material composition having a desired interconnected cell ratio of the oil-containing porous silica.

As the method of kneading the resin material, the porous silica, and other components of the sliding material composition of the present invention, known methods can be utilized. For example, after the resin material, the porous silica, and other components are kneaded by using a mixer such as a Henschel mixer, a ball mill or a tumbler mixer, the mixture is supplied to an injection molding apparatus or a melt extrusion apparatus (for example, twin screw extruder); or melt-mixed in advance by utilizing a heat roller, a kneader, a Banbury mixer or a melt extruding apparatus; or vacuum molding, blow molding, foaming molding, multi-layer molding or heating compression molding may be performed.

In kneading the resin, the porous silica, and the lubricant, the kneading order is not limited to a specific order, but it is preferable that the porous silica and the lubricant are kneaded in advance, and after oil is contained in the porous silica, the mixture of the porous silica and the lubricant are mixed with the base resin. It is possible to carry out a method of kneading the resin and the porous silica to form a molding and thereafter impregnating the molding with the lubricant.

Because the porous silica easily absorbs moisture and water, it is preferable to dry the porous silica before kneading is performed. Drying means is not limited to a specific means, but drying in an electric oven and vacuum drying can be adopted.

In forming the sliding material composition into the coating film, the porous silica impregnated with the lubricant is mixed with the resin component and thereafter the mixture and a coating liquid generally used are mixed with each other. In performing coating treatment, it is possible to perform ordinary coating treatment. In performing the coating treatment, the coating treatment is not limited to a spray method, an electrostatic deposition method, and a fluidization dip method and the like.

In mixing the porous silica and the lubricant with each other in advance, when the viscosity of the lubricant is high, it is difficult for the oil to permeate into the spherical porous silica. In this case, it is possible to use a method of diluting the oil with an appropriate solvent in which the oil dissolves, permeating the diluted liquid into the porous silica, and gradually drying the diluted liquid to volatilize the solvent. Thereby the lubricant is impregnated into the porous silica.

Alternatively a method of dipping the porous silica in the lubricant and drawing a vacuum to forcibly permeate the lubricant into the porous silica, a method of heating a lubricant solid at a normal temperature up to an appropriate temperature and fusing the lubricant to permeate it into the porous silica, and a method of heating a lubricant, having a high viscosity, which is liquid at a normal temperature up to an appropriate temperature to drop the viscosity of the lubricant and permeate it into the porous silica are effective methods. It is possible to mix the oil-containing spherical porous silica with a liquid resin such as unsaturated polyester resin, impregnate the mixture into various woven cloth, and layer them one upon another to use the laminate as a resin sliding material.

Further so long as the lubricity of the sliding material composition of the present invention is not inhibited, it is possible to modify the sliding material composition for the improvement of its property in the form of an intermediate product or a final product by chemical treatment such as annealing treatment or physical treatment.

As examples of the sliding material composition of the present invention, there is no limitation so long as it is used for sliding portions. For example, the sliding material composition is used as sliding parts such as a sliding bearing, a gear, a sliding sheet, a seal ring, a roller, various carriages, and the like; and sliding materials such as a cage of a rolling bearing, a solid lubricant, a seal of the rolling bearing, a seal of a direct acting bearing, a spacer inserted between balls of a ball screw, a race of the rolling bearing, and the like.

EXAMPLE

• Reference Example 1

As the porous silica, SunsphereH33 (commercial name) produced by Asahi Glass Co. Ltd. was prepared. As the silicone oil serving as the lubricant, KF96H (commercial name) produced by Shin-Etsu Chemical Co., Ltd. was prepared. Five parts by volume of the silicone oil was sufficiently mixed with one part by volume of the porous silica to impregnate the porous silica with the silicone oil. Thereby the oil-containing porous silica (abbreviation in table 1: Si) was prepared. The obtained oil-containing porous silica was powdery and could be used as a mixing agent with the resin material.

• Examples 1 through 4

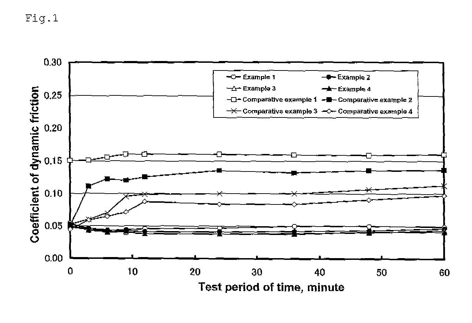

As polyethylene resin serving as the material of the base resin, Mipelon XM220 (commercial name, abbreviation in table 1: PE) produced by Mitsui Chemicals Co., Ltd. was mixed with the oil-containing porous silica prepared in the reference example 1 at the ratio shown in table 1. Mixed powder was supplied to a mold and molded by heat compression molding method. As the molding condition, temperature: 220°C, pressure: 40 MPa. Turning processing was used for each obtained molding to prepare a ring-shaped sliding material specimen which is the sliding material composition having a dimension of $\phi\, 17 \times \phi\, 21 \times 10\text{mm}$. By using the obtained specimen, the end face of the ring was brought into contact with a rotating disk (ring-on-disk testing machine) to conduct a friction test in conditions and an evaluation method shown below. Results are shown in Fig. 1. The abscissa axis and the ordinate axis in Fig. 1 show a test period of time (minute) and a coefficient of dynamic friction respectively.

Conditions of friction and wear test are as follow:

Mating material: SUS304 (Ra = 0.1$\mu$m)
Face pressure: 15 MPa
Sliding speed: 0.1 m/s
Temperature: 30°C
Period of time: 60 minutes

• Comparative Examples 1 through 5

At the mixing ratio shown in table 1, slidingmaterialspecimens were prepared in a manner similar to that of the example 1. A friction and wear test was conducted in the same condition as that of the example 1. Results are shown in Fig. 1. In the comparative example 5, because the mixing amount of the porous silica impregnated with the lubricant was as large as 65 vol %, the obtained moldings were frail and thus specimens could not be prepared.

The interconnected cell ratio of each oil-containing porous silica found by simulation based on the above-described computing method was also shown in table 1. In the simulation, computations were performed by setting the thickness of each molding to 0.5mm, the number of cells in the X-axis direction and the Y-axis direction to 40, and average particle diameter of the oil-containing porous silica to 5μm. The number of cells in the Z-axis direction was set to 100. The interconnected cell ratio was found in the range from the surface layer to the depth of 25 cells, in 100 cells in the Z-axi direction. Computations were repeated 1000 times by using the <u>same</u> parameters. An average value of obtained solutions was computed and shown in table 1.

Simulation was performed on the mixing ratios of the oil-containing porous silica shown in table 1 in the same condition other than the mixing ratio to derive the relationship between the mixing ratio of the oil-containing porous silica and the interconnected cell ratio. Results are shown in Fig. 4. The abscissa axis and the ordinate axis in Fig. 4 show the mixing amount (vol %) of the oil-containing porous silica and the interconnected cell ratio (%) respectively.

Table 1

| | Example | | | | Comparative example | | | | |
|---|---|---|---|---|---|---|---|---|---|
| | 1 | 2 | 3 | 4 | 1 | 2 | 3 | 4 | 5 |
| **PE (vol %)** | 70 | 65 | 60 | 50 | 100 | 88 | 82 | 76 | 35 |
| **Si (vol %)** | 30 | 35 | 40 | 50 | 0 | 12 | 18 | 24 | 65 |
| **Interconnected cell ratio(%)** | 29.8 | 78.0 | 91.2 | 100.0 | -- | 6.2 | 7.0 | 17.0 | -- |

As shown in table 1 and Fig. 1, from the initial time to the finish time in the operation, low and stable friction coefficients were shown in the examples 1 through 4 in which 30 to 60 vol % of the porous silica impregnated with the lubricant was mixed with the resin material and the interconnected cell ratio was set to not less than 20%.

On the other hand, the sliding material composition of the comparative example 1 consisting of the resin had a high coefficient of friction. In the sliding material compositions of the comparative examples 2 through 4, because the porous silica impregnated with the lubricant was mixed with the resin material, the coefficients of friction thereof were low in the initial time in the operation. But, because the interconnected cell ratio was low, the coefficients of friction increased with the passage of the operation time.

INDUSTRIAL APPLICABILITY

The sliding material composition of the present invention has low friction and low wear properties, as capable of continuously supplying the lubricant to the surface of the sliding portion. Therefore the sliding material composition can be preferably utilized as sliding parts such as a sliding bearing, a gear, a sliding sheet, a seal ring, a roller, various carriages, and the like; and sliding materials such as a cage of a rolling bearing, a solid lubricant, a seal of the rolling bearing, a seal of a direct acting bearing, a spacer inserted between balls of a ball screw, a race of the rolling bearing, and the like.

**Claims**

1. A sliding material composition comprising a resin material with which at least porous silica and a lubricant are mixed; and a ratio of a sum of a mixing amount of said porous silica and that of said lubricant to a whole amount of said sliding material composition is 30 to 60 vol %.

2. The sliding material composition according to claim 1, wherein said porous silica is spherical porous silica, having continuous pores, which consists of an aggregate of primary fine particles; and an average particle diameter of said spherical porous silica is 0.5 to 100μm.

3. The sliding material composition according to claim 1, wherein an inside of said porous silica and an outer surface thereof are covered with a silanol group.

4. The sliding material composition according to claim 1, wherein said porous silica has an oil absorption amount at 300 to 400 ml/100g; and said porous silica is impregnated with said lubricant in advance.

5. The sliding material composition according to claim 1, wherein said resin material is polyethylene resin.

6. The sliding material composition according to claim 1, wherein said lubricant is silicone oil.

7. The sliding material composition according to claim 1, wherein of 30 to 60 vol % which is said ratio of said sum of said mixing amount of said porous silica and that of said lubricant, a ratio of said mixing amount of said porous silica is 5 to 10 vol %, and a ratio of said mixing amount of said lubricant is 25 to 50 vol %.

8. The sliding material composition according to claim 1, wherein an interconnected cell ratio of an oil-containing porous silica in which said lubricant is held by said porous silica is not less than 20% when said interconnected cell ratio is found by a predetermined computing method;
said predetermined computing method comprises a modeling step of expressing a bulk body supposed to be composed of said oil-containing porous silica and said resin material as a model formed by layering an arbitrary number of cells one upon another in an X-axis direction and a Y-axis direction both of which are face directions and at least 25 cells one upon another in a Z-axis direction which is a depth direction, wherein said cells are cubic cells with a length of one edge thereof equal to an average particle diameter of said oil-containing porous silica;
a random disposing step of disposing cells corresponding to a mixing ratio of said oil-containing porous silica in said bulk body at random positions inside said model as oil-containing porous silica cells; and
a step of counting a number of interconnected cells of setting cells which contact each other in said model in a vertical direction, a left-to-right direction, or a longitudinal direction as continuous cells and setting an XY face composed of cells of an uppermost surface as a surface layer of said bulk body, and counting oil-containing porous silica cells of said surface layer and oil-containing porous silica cells, disposed inside said model, which are continuous from said oil-containing porous silica cells of said surface layer to oil-containing porous silica cells disposed at a depth of 25 cells as interconnected cells,
wherein a ratio of said number of interconnected cells obtained at said step of counting said number of said interconnected cells to a number of oil-containing porous silica cells present from said surface layer of said bulk body to a depth of 25 cells composing said model is computed as said interconnected cell ratio.

9. The sliding material composition according to claim 8, wherein a number of cells used in said modeling step is not less than 30 cells in said X-axis direction, not less than 30 cells in said Y-axis direction, and a number of cells of one horizontal layer is set to not less than 1000.

Fig.1

Fig.2

Y

Y-axis direction

X

X-axis direction

Depth direction

Z

Fig.3

Color cell : Cells (total: 6) continuous with center cell

Fig.4

## INTERNATIONAL SEARCH REPORT

| | International application No. |
|---|---|
| | PCT/JP2008/050311 |

**A. CLASSIFICATION OF SUBJECT MATTER**
*C10M169/04*(2006.01)i, *C10M125/26*(2006.01)i, *F16C33/20*(2006.01)i

According to International Patent Classification (IPC) or to both national classification and IPC

**B. FIELDS SEARCHED**

Minimum documentation searched (classification system followed by classification symbols)
C10M169/04, C10M125/26, F16C33/20

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-129183 A  (NTN Corp.),<br>09 May, 2002 (09.05.02),<br>Claims; Par. Nos. [0006], [0012], [0017],<br>[0022], [0023]; examples 6 to 8<br>& US 2003/22797 A1 | 1-9 |
| X | JP 2002-98189 A  (NTN Corp.),<br>05 April, 2002 (05.04.02),<br>Claims; Par. Nos. [0008], [0012], [0013],<br>[0015], [0018]; examples<br>(Family: none) | 1-9 |
| X | JP 2005-24094 A  (NTN Corp.),<br>27 January, 2005 (27.01.05),<br>Claims; Par. Nos. [0021], [0024] to [0028];<br>examples<br>& WO 2004/111476 A1      & US 2006/251348 A1 | 1-9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2008 (14.03.08) | 25 March, 2008 (25.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/050311 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2003-120822 A  (Koyo Seiko Co., Ltd.),<br>23 April, 2003 (23.04.03),<br>Claims; Par. Nos. [0001], [0011], [0029] to<br>[0033], [0046]<br>(Family: none) | 1-4,6-9<br>5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7003074 A
- JP 2002129183 A
- JP 2006282898 A
- JP 2000143228 A